(19) Europäisches Patentamt
European Patent Office
Office européen des brevets

(11) **EP 1 863 185 A1**

(12) **EUROPEAN PATENT APPLICATION**
published in accordance with Art. 158(3) EPC

(43) Date of publication:
05.12.2007 Bulletin 2007/49

(51) Int Cl.:
*H04B 1/26* (2006.01)     *H03H 3/02* (2006.01)

(21) Application number: 06729065.0

(86) International application number:
**PCT/JP2006/305031**

(22) Date of filing: **14.03.2006**

(87) International publication number:
**WO 2006/103921 (05.10.2006 Gazette 2006/40)**

(84) Designated Contracting States:
**DE FR GB**

(30) Priority: **25.03.2005 JP 2005089853**

(71) Applicant: **Pioneer Corporation**
**Tokyo 153-8654 (JP)**

(72) Inventor: **YAMAMOTO, Yuji,**
**Kawagoe Koujou, Pioneer Corporation**
**Saitama, 3508555 (JP)**

(74) Representative: **Popp, Eugen et al**
**MEISSNER, BOLTE & PARTNER**
**Widenmayerstrasse 48**
**80538 München (DE)**

(54) **RADIO RECEIVING APPARATUS**

(57)     A radio receiving device 1 which substantially A/D converts an RF signal SRF and makes it possible to execute a receiving processing by digital signal processing is provided. A received signal of a desired channel frequency Fchi contained in an RF signal SRF is A/D converted by a band-pass A/D converter 4. A band-pass filter provided in the band-pass A/D converter 4 has a central frequency Fcv lower than the channel frequency Fchi, and a pass bandwidth BW corresponding to a signal frequency bandwidth of the received signal with the central frequency Fcv. In a local oscillation part 8, a local oscillation signal Svco of a local oscillation frequency Fsi lower by a central frequency Fcv than the channel frequency Fchi is supplied to the band-pass A/D converter 4, and the RF signal SRF is A/D converted with the local oscillation frequency Fsi as a sampling frequency by the band-pass A/D converter 4.

*FIG.2 A*

**(Cont. next page)**

## FIG.2 B

## FIG.2 C

## FIG.2 D

**Description**

BACKGROUND OF THE INVENTION

The present invention relates to a radio receiving device for receiving a radio broadcast or the like, particularly to a radio receiver for A/D converting and processing a received signal outputted from a receiving antenna on a side closer to the receiving antenna.

In recent years, it has been noted that a radio receiving device for receiving radio broadcasting A/D converts a received signal (analog/digital conversion) on a side closer to a receiving antenna, and executes subsequent processings such as detection or demodulation or the like in a digital region.

For example, "a receiver having a sigma-delta analog-digital converter" disclosed in Japanese Patent application Laid-Open No. 2001-526487, as shown in FIG.2 of the document, is provided with a front stage for processing in an analog region and a demodulator for processing in a digital region. Once the front stage down-converts a high frequency RF (radio frequency) signal and outputs an IF (intermediate frequency) signal, a $\Sigma\Delta$ADC (sigma-delta analog-digital converter) within the demodulator converts the IF signal into an IF signal of a sample series by A/D conversion based on oversampling. Furthermore, a digital signal processor performs a demodulation or the like on the IF signal of the sample series by digital signal processing.

That is, the receiver disclosed in Japanese Patent application Laid-Open No. 2001-526487 is, basically, configured as shown in FIG.1A. Then, a mixer as a frequency converter mixes an RF signal from the RF amplifier with a local oscillation signal of frequency FL from a local oscillation part, and the signal is down-converted into an IF signal of intermediate frequency Fo. Furthermore, processing until band limitation by an IF filter is executed in the analog region, but subsequent processings such as detection or demodulation or the like can be executed in the digital region.

The receiver having a conventional $\Sigma\Delta$ADC disclosed in Japanese Patent application Laid-Open No. 2001-526487 executes a processing before generating the IF signal still in the analog region. Therefore, the advantage of executing more processing in the digital region has not been sufficiently obtained. For example, if many of functions are processed in the digital region, a higher performance of device and a downsizing or the like by forming with a semiconductor IC device become possible, but in order to obtain these advantages, it is necessary to further improve technology.

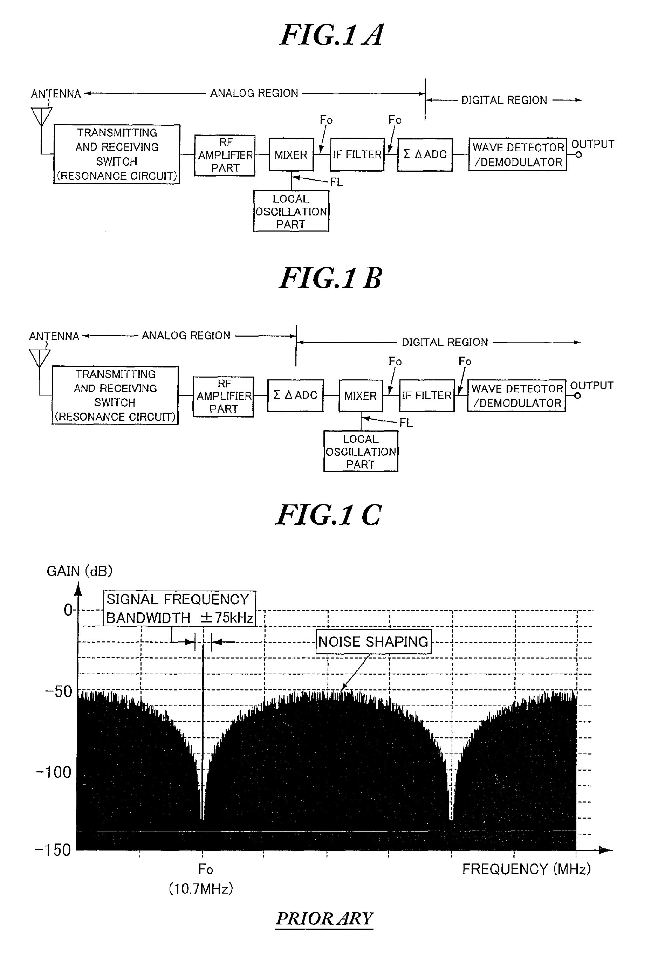

Then, it is considered to execute the subsequent processing including the mixer in the digital region by changing the configuration of FIG.1A into that of FIG.1B, i.e., providing with a $\Sigma\Delta$ADC between the RF amplifier part and the mixer and A/D converting the RF signal outputted from the RF amplifier part.

However, as shown in FIG.1C, the $\Sigma\Delta$ADC becomes effective when a signal frequency bandwidth is narrow enough for an oversampling frequency, as is known from an oversampling and noise-shaping characteristics. For this reason, although it is possible to A/D convert an IF signal based on the oversampling frequency in a narrow bandwidth limited by an IF filter in the conventional receiver as shown in FIG.1A, the configuration in FIG. 1B is forced to A/D convert an RF signal in a broad bandwidth with an extremely high sampling frequency, which results in becoming impossible to actualize it.

For example, in case of receiving FM radio broadcast, according to the configuration in FIG. 1A, the IF filter band-limits an IF signal down-converted to an intermediate frequency Fo (10.7 MHz) by a mixer, and the bandwidth of the IF signal (maximum frequency deviation) outputted from an IF filter becomes narrow, for example about ±75 kHz. Therefore, when the IF signal is oversampled by an oversampling frequency about 256 times as much as the IF signal (for example, 40 MHz), band stop characteristics are applied to quantization noises or the like as shown in FIG.1C, and it is possible to A/D convert the IF signal within the signal frequency bandwidth (±75 kHz) which is a stopped band of quantization noises or the like.

On the other hand, in case of receiving FM radio broadcast merely with a configuration in FIG.1B, the bandwidth of the RF signal is a high frequency of approximately 100 MHz. Thus, it will become impossible in reality to A/D convert the RF signal with the oversampling frequency about 256 times as much as the RF signal.

SUMMARY OF THE INVENTION

The present invention was made in view of foregoing problems. The object of the present invention is to provide a radio receiving device which makes it possible to substantially A/D convert an RF signal and execute receiving processing by a digital signal processing.

According to an invention as described in a first aspect thereof, there is provided a radio receiving device comprising an A/D converter which A/D converts a received signal of a desired channel frequency contained in an RF signal, wherein the A/D converter is formed of a band-pass A/D converter including a band-pass filter having a pass bandwidth corresponding to a signal frequency bandwidth of the received signal with a central frequency lower than the channel frequency being a bandwidth center. The radio receiving device further comprises local oscillation means for supplying a local oscillation signal of a local oscillation frequency which is lower by a central frequency of the band-pass filter than the channel frequency to the A/D converter and allowing the A/D converter to A/D convert the RF signal with the local oscillation frequency as a sampling frequency.

According to an invention as described in a second aspect thereof, there is provided the radio receiving device of the first aspect further comprising filter means for passing a desired component of the received signal contained in an output signal of the A/D converter, and rate conversion means for downsampling the desired component passing through the filter means.

According to an invention as described in a third aspect thereof, there is provided the radio receiving device of the first aspect, wherein the band-pass A/D converter is a band-pass $\Sigma\Delta$A/D converter having the band-pass filter.

According to an invention as described in a fourth aspect thereof, there is provided the radio receiving device of the third aspect, wherein a central frequency of the band-pass filter is a quarter of the channel frequency, and the local oscillation frequency is 0.8 times as much as the channel frequency.

According to an invention as described in a fifth aspect thereof, there is provided the radio receiving device of the fourth aspect further comprising IQ signal generation means for generating an I signal and a Q signal as a quarter frequency of the local oscillation frequency from the local oscillation signal and digital mixer means for multiplying a bit stream signal outputted from the band-pass $\Sigma\Delta$A/D converter by the I signal and the Q signal.

According to an invention as described in a sixth aspect thereof, there is provided the radio receiving device of the fifth aspect further comprising a digital band-pass filter for passing a desired component of the received signal contained in an output signal of the digital mixer means and a downsampler for downsampling the desired component passing through the digital band-pass filter.

BRIEF DESCRIPTION OF DRAWINGS

FIGs.1A, 1B and 1C are views for illustrating a configuration and problems of a conventional radio receiving device.
FIGs.2A-2D are block diagrams illustrating a configuration of a radio receiving device related to an embodiment of the present invention and views for illustrating functions thereof, respectively.
FIGs.3A and 3B are block diagrams illustrating a configuration of a radio receiving device as an example of the present invention.
FIG.4 is a view for illustrating operation and functions of the radio receiving device shown in FIGs.3A and 3B.

DETAILED DESCRIPTION OF THE PREFERRED EMBODIMENTS

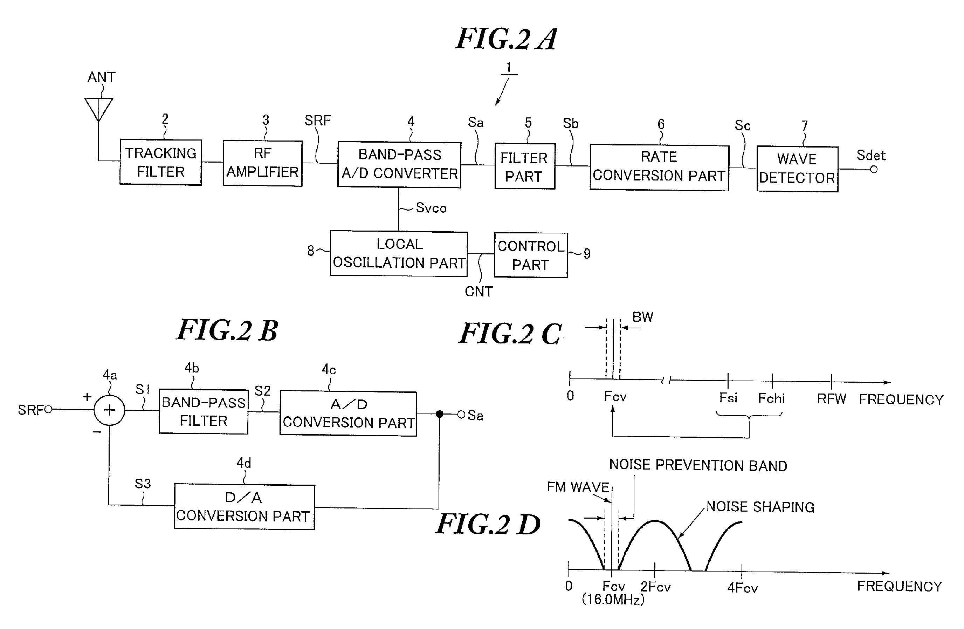

A radio receiving device related to an embodiment of the present invention will be described with reference to FIGs.2A-2D. FIG.2A is a block diagram indicating a configuration of the radio receiving device of the present embodiment, FIG.2B is a block diagram indicating a configuration of a band-pass A/D converter, and FIGs.2C, 2D are views for illustrating functions of the radio receiving device and the band-pass A/D converter of this embodiment.

In FIG.2A, this radio receiving device 1 is comprised of a tracking filter 2 as a resonance circuit passing a signal of FM broadcast band from among various broadcast waves received with an antenna ANT, an RF amplifier 3 amplifying a signal passing through the tracking filter 2 and outputting an RF signal SRF, a band-pass A/D converter 4, a filter part 5, a rate conversion part 6, a wave detector 7, a local oscillation part 8 and a control part 9.

The control part 9 is a channel select control circuit which indicates a broadcast channel desired by users or the like by supplying a channel select control signal CNT to the local oscillation part 8 according to channel select operation by users or the like.

The local oscillation part 8 is formed of a local oscillation circuit of a synthesizer tuning system comprising a VCO (Voltage Controlled Oscillator) circuit and a PLL (Phase Locked Loop) circuit, and generates a local oscillation signal Svco of a local oscillation frequency Fsi corresponding to a broadcast channel (a broadcast channel users conduct a select operation on) CHi indicated by the channel select control signal CNT to output it.

The band-pass A/D converter 4 operates according to the local oscillation signal Svco, sets the local oscillation frequency Fsi as a sampling frequency, A/D converts the RF signal SRF into a digital signal Sa, and supplies it to the filter part 5.

Here, the band-pass A/D converter has a configuration shown in FIG.2B as a specific example. That is, the band-pass A/D converter is formed of a subtracter 4a which calculates a difference between the RF signal SRF and an after-mentioned returned signal S3 (SRF - S3) and outputs the differential signal S1, a band-pass filter 4b having a given central frequency Fcv and a pass bandwidth BW, an A/D conversion part 4c which sets the above-mentioned local oscillation frequency Fsi as a sampling frequency and A/D converts a passing signal S2 passing through the band-pass filter 4b into the digital signal Sa, and a D/A conversion part 4d which generates the above-mentioned returned signal S3 by D/A converting (digital-analog conversion) the digital signal Sa to supply it to the subtracter 4a.

Furthermore, a central frequency Fcv and a pass bandwidth BW of the band-pass filter 4b are determined as follows.

First, the pass bandwidth BW is determined in accordance with a signal frequency bandwidth of a desired FM wave. For example, it is determined in accordance with a maximum frequency deviation of FM wave. In Japanese FM broadcast standards, the maximum frequency deviation of FM wave is about ±75 kHz with a carrier frequency as a center thereof, and thus the pass bandwidth BW is determined to be in the range of about ±75 kHz (150 kHz in all)with the central frequency Fcv as a center thereof. In addition, for example, considering neighboring disturbances or the like, the pass bandwidth BW is determined to be in the range of about ±100 kHz (200 kHz in all) with the central frequency Fcv as a center thereof.

Next, the central frequency Fcv of the band-pass filter 4b is determined to be the frequency of the difference between a channel frequency Fchi and a local oscillation frequency Fsi (Fchi - Fsi). That is, if a channel frequency of each broadcast channel CHi (letter "i" is a natural number) assigned to an FM broadcast band is represented by Fchi (letter "i" is a natural number) and a local oscillation frequency for selecting each broadcast channel CHi is represented by Fsi (letter "i" is a natural number), the central frequency Fcv is determined to the frequency of the difference between the channel frequency Fchi and the local oscillation frequency Fsi (Fchi - Fsi) as shown in the following formula(1).

$$Fcv = Fchi - Fsi \quad \ldots (1)$$

Furthermore, the local oscillation frequency Fsi is determined to be a frequency which meets the requirements of the above formula (1), and further determined to be a high frequency enough to be able to oversample the pass bandwidth BW of the band-pass filter 4b and also to be lower than the bandwidth RFW of the RF signal SRF.

$$BW \ll Fsi < RFW \quad \ldots (2)$$

Accordingly, as typically shown in FIG.2C, the pass bandwidth BW of the band-pass filter 4b is determined according to the signal frequency bandwidth of the received signal of the FM wave(desired wave), and further a frequency which is lower by a central frequency Fcv of the band-pass filter 4b than the channel frequency Fchi of each broadcast channel CHi contained in the bandwidth RFW of the RF signal SRF is determined as the local oscillation frequency Fsi. The local oscillation frequency Fsi is determined to be a frequency high enough for the signal frequency bandwidth (pass bandwidth BW) of the above-mentioned FM wave (desired wave).

Table 1 illustrates the relation between the local oscillation frequency Fsi and the central frequency Fcv of the band-pass filter 4b determined according to such conditions.

[Table 1]

| Broadcast channel CHi | Channel frequency Fchi (MHz) | Local oscillation frequency Fsi (MHz) | Central frequency Fcv Fchi-Fsi (MHz) |
|---|---|---|---|
| AA Broadcast [CH1] | Fchl=77.1 | Fs1=61.1 | 16.0 |
| BB Broadcast [CH2] | Fch2=78.0 | Fs2=62.0 | 16.0 |
| CC Broadcast [CH3] | Fch3=80.0 | Fs3=64.0 | 16.0 |
| DD Broadcast [CH4] | Fch4=80.7 | Fs4=64.7 | 16.0 |
| EE Broadcast [CH5] | Fch5=81.3 | Fs5=65.3 | 16.0 |
| FF Broadcast [CH6] | Fch6=84.7 | Fs6=68.7 | 16.0 |
| ..... | ..... | ..... | 16.0 |

For example, when users or the like conduct the operation of selecting a broadcast channel CH3, the local oscillation part 8 generates the local oscillation signal Svco of a local oscillation frequency Fs3 (64.0 MHz) which is lower by a central frequency Fcv (16.0 MHz) than a channel frequency Fch3 (80.0 MHz) in accordance with the instructions from the control part 9. Then, the band-pass A/D converter 4 shown in FIG.2B oversamples the RF signal SRF with the local oscillation frequency Fs3 as a sampling frequency to A/D convert it.

Then, when the A/D converter 4c in the band-pass A/D converter 4 oversamples according to the local oscillation frequency Fs3, an FM wave (received signal in a basic band) of the channel frequency Fch3 (80.0 MHz) appears in the same frequency band as the central frequency Fcv of the band-pass filter 4b and the pass bandwidth BW based on a folding principle as shown in FIG.2D, so that the FM wave is A/D converted into the digital signal Sa.

Furthermore, the D/A conversion part 4d provided in a returned pathway synchronizes with a local oscillation frequency Fs3, and D/A converts the digital signal Sa into the returned signal S3. Since a differential signal S1 between the RF signal SRF generated in the subtracter 4a and the returned signal S3 is inputted to the A/D conversion part 4c through the band-pass filter 4b, a noise prevention band appears, by a noise-shaping effect, in the same frequency band as the central frequency Fcv and the pass bandwidth BW of the band-pass filter 4b. Therefore, a sampled folding noise and a quantized noise made in the A/D conversion part 4c are expelled from the noise prevention band, and the digital signal Sa with good S/N (signal-to-noise) is outputted from the A/D conversion part 4c and supplied to the filter part 5.

In addition, even if other broadcast channel CHi illustrated in Table 1 is selected by users or the like, the noise prevention band appears in the same frequency band as the central frequency Fcv and the pass bandwidth BW of the band-pass filter 4b based on the above folding principle and the noise-shaping effect. Since the noise prevention band becomes a signal frequency bandwidth of an FM wave, the band-pass A/D converter 4 A/D converts the received signal (FM wave) of the selected broadcast channel CHi into the digital signal Sa with good S/N, and supplies it to the filter part 5.

The filter part 5 is formed of a band-pass digital filter which prevents the pass of unnecessary noise component contained in the digital signal Sa that is an output signal of the A/D conversion part 4c and passes only a desired component of an FM wave data Sb.

The rate conversion part 6 performs a so-called downsampling by executing a thinning-out processing to the above FM wave data Sb oversampled on a time axis, makes it an FM wave data Sc with a low sampling frequency, and supplies it to the wave detector 7.

The wave detector 7 digitally detects an FM wave data Sc by a digital signal processing, and outputs the detected signal (baseband signal) Sdet.

As explained above, according to the radio receiving device 1 of the present embodiment, it A/D converts the RF signal SRF by the band-pass A/D converter 4, determines a frequency lower by the central frequency Fcv of the band-pass filter 4b in the band-pass A/D converter 4 than the channel frequency Fchi to be the sampling frequency (local oscillation frequency) Fsi, and makes oversampling by the band-pass A/D converter 4, so that it can A/D convert an FM wave which is to actually bias a low frequency by the folding effect, and also it can make A/D conversion into the digital signal Sa with good S/N by the noise-shaping effect.

That is, since the band-pass A/D converter 4 can operate at a sampling frequency of about 100 MHz, according to the present embodiment, a desired channel frequency of a received signal (FM wave) can be A/D converted into the digital signal Sa with low frequency by directly A/D converting the RF signal SRF as if A/D converting the intermediate frequency signal (IF signal), so that the mixer for down-converting the RF signal SRF into IF signal can be made unnecessary. As a result, it becomes possible to A/D convert on a side closer to the antenna ANT, and it also becomes possible to form the configuration of the band-pass A/D converter 4 after output thereof in the digital signal processing circuit, so that the radio receiving device which can process most of processing functions in the digital region can be provided.

In addition, the radio receiving device 1 of the present embodiment is provided with the filter part 5 and the rate conversion part 6, so that the oversampled digital signal Sa can be downsampled to data Sc of a desired low frequency, for example, the wave detector 7 can be formed as a digital wave detector complying with FM broadcast standards by converting a central frequency of the digital signal Sa into 10.7 MHz. As a result, a digital wave detector and a digital demodulator or the like which detect wave by an A/D conversion of a conventional IF signal can be used as they are, so that the radio receiving device with full versatility can be provided.

Further, the band-pass A/D converter 4 having a basic configuration shown in FIG.2B is to be used in an embodiment explained above, but it is also possible to use a band-pass A/D converter with other configuration. For example, it is also possible to use a band-pass $\Sigma\Delta$ A/D converter with the A/D converter 4c as a quantizer. Since it becomes possible to further raise an oversampling frequency by using the band-pass $\Sigma\Delta$ A/D converter, the digital signal Sa with better S/N can be generated by the A/D conversion of the received signal (FM wave) contained in the RF signal SRF, so that a further functional advancement of the receiving device and a miniaturization of the device by being formed with a semiconductor IC device can be realized.

In addition, the case of receiving an FM broadcast has been explained, but the radio receiving device 1 of the present embodiment can also receive an AM broadcast based on the similar principle, and it is also possible to apply a component part of the band-pass A/D converter 4 and the local oscillation part 8 to a so-called tuner part for receiving digital ground-based broadcasting.

In addition, it is permissible to provide a variable gain circuit (AGC), between an output end of the RF amplifier and an input end of the band-pass A/D converter 4, which detects amplitude fluctuation (amplitude fluctuation in case as an analog signal) of the digital signal Sa as an output signal of the band-pass A/D converter 4 through a digital lowpass filter and adjusts automatically a voltage amplification rate for the RF signal SRF so as to reduce the detected fluctuation. In such a configuration, an amplitude of the RF signal inputted to the band-pass A/D converter 4 is stabilized so that the receiving performance of the converter 4 can be always kept in good condition.

In addition, a variable gain circuit (AGC), which detects an amplitude fluctuation of the RF signal SRF outputted from the RF amplifier 3 through an analog lowpass filter and adjusts automatically a voltage amplification rate for the RF signal SRF so as to reduce a detected fluctuation, may be provided between an output end of the RF amplifier 3 and an input end of the band-pass A/D converter 4. Also by such a configuration, the amplitude of the RF signal inputted to the band-pass A/D converter 4 is stabilized so that the receiving performance of the converter 4 can be always kept in good condition.

[More Specific Example]

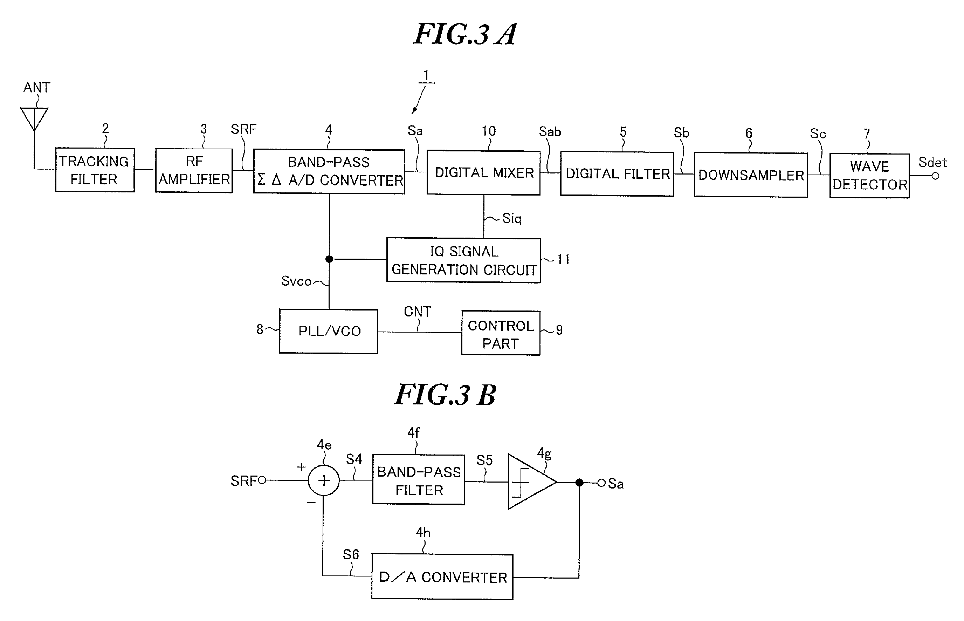

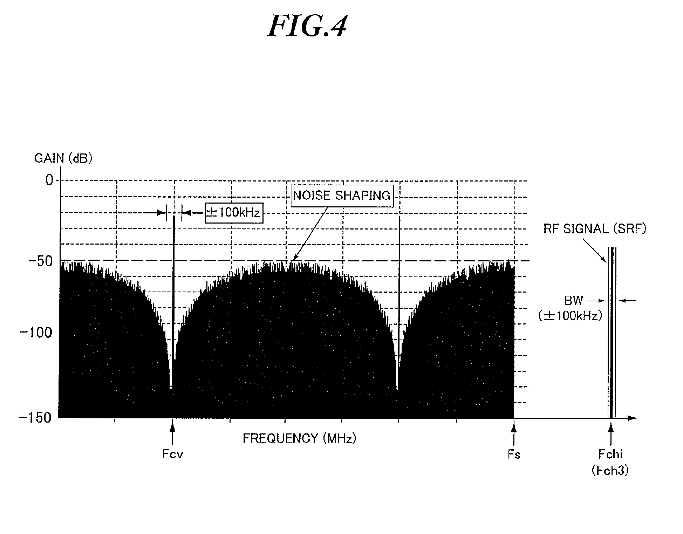

Next, described is a more specific example with reference to FIGs.3A, 3B and FIG.4. FIG.3A is a block diagram illustrating a configuration of a radio receiving device of the present example and indicates the parts identical with or corresponding to ones of FIG.2A with the same figures or symbols. FIG.3B is a block diagram illustrating a configuration of the radio receiving device. FIG.4 is a view for illustrating the function of the radio receiving device and a band-pass $\Sigma\Delta$A/D converter of the present example.

In FIG.3A, this radio receiving device 1 is a receiving device for receiving an FM broadcast having a tracking filter 2 connected to an antenna ANT, an RF amplifier 3, a band-pass $\Sigma\Delta$A/D converter 4, a digital mixer 10, a digital filter 5, a downsampler 6, the wave detector 7, a local oscillation part 8, a control part 9 and an IQ signal generation circuit 11.

The tracking filter 2 passes a signal of an FM broadcast band from various broadcast waves received by the antenna ANT. The RF amplifier 3 amplifies a signal passing through the tracking filter 2 and outputs an RF signal SRF.

The control part 9 supplies a channel select control signal CNT to the local oscillation part 8 according to user's channel select operation. The local oscillation part 8 is formed of a local oscillation circuit of a synthesizer tuning system provided with a VOC circuit and a PPL circuit, and generates a local oscillation signal Svco of a local oscillation frequency Fsi corresponding to a broadcast channel Chi indicated by the channel select control signal CNT and supplies it to the band-pass $\Sigma\Delta$A/D converter 4 and the IQ signal generation circuit 11. That is, the local oscillation part 8 outputs a local oscillation signal Svco of a local oscillation frequency Fsi which meets the requirement of the above formulas (1), (2) according to a broadcast channel CHi indicated by the control part 9.

In addition, as will hereinafter be described in detail, a central frequency Fov of a band-pass filter 4f provided in the band-pass $\Sigma\Delta$A/D converter 4 is set at 16.0 MHz. Therefore, the local oscillation part 8 sets a local oscillation frequency Fsi of a local oscillation signal Svco at a frequency lower by 16.0 MHz than a channel frequency Fchi of each broadcast channel CHi. Furthermore, since a maximum frequency deviation of FM wave is about ±75 KHz, a signal frequency bandwidth of FM wave is set at ±100 KHz (200 kHz in all), the local oscillation frequency Fsi is determined at enough high frequency to oversample the FM wave of 200 kHz, considering neighboring disturbances or the like. As a result, the local oscillation part 8 sets the local oscillation signal Svco at the local oscillation frequency Fsi corresponding to the channel frequency Fchi of each broadcast channel Chi based on the relation as shown in the foregoing table 1, and outputs it.

The band-pass $\Sigma\Delta$A/D converter 4 operates in accordance with the local oscillation signal Svco, and A/D converts the RF signal SRF into a 1-bit stream signal Sa with the local oscillation frequency Fsi as a sampling frequency and outputs it. Furthermore, the band-pass $\Sigma\Delta$A/D converter 4 has a configuration shown in FIG.3B.

That is, the band-pass $\Sigma\Delta$A/D converter 4 is formed of hi-speed components such as HEMT(high electron mobility transistor), having a subtracter 4e which outputs a differential signal S4 calculated from the difference (SRF - S6) between the RF signal SRF supplied from the RF amplifier 3 and an after-mentioned returned signal S6, a band-pass filter 4f, a quantizer 4f which A/D converts a passing signal S5 passing through the band-pass filter 4f into a 1-bit stream signal Sa with the local oscillation frequency Fsi supplied from the local oscillation part 8 as a sampling frequency, and a D/A converter 4h generating the returned signal S6 and supplying to the subtracter 4e by D/A conversion of the 1-bit stream signal Sa.

Furthermore, the band-pass filter 4f is formed of a continuous-time Gm-C active band-pass filter, and the central frequency Fcv is set at 16.0 MHz and the pass bandwidth is set at ±100 kHz (200kHz in all).

The quantizer 4g is formed of a comparator, and the D/A converter 4h uses a switched capacitor which D/A converts the 1-bit stream signal Sa being synchronized with the local oscillation frequency Fsi.

The IQ signal generation circuit 11 is formed of a prescaler which divides the local oscillation signal Svco from the local oscillation part 8 and generates an I signal that is an SIN component consisting of a frequency of one-N of the local oscillation frequency Fsi and a Q signal that is a COS component, and supplies the I and Q signals (shown by code, Siq) to the digital mixer 10. In addition, in the present example, N = 4, and the I and Q signals Siq consisting of a quarter of the local oscillation frequency Fsi are supplied from the IQ signal generation circuit 11 to the digital mixer 10.

The digital mixer 10 is formed of a digital multiplier which multiplies the 1-bit stream signal Sa by IQ signals Siq. Then, by multiplying the 1-bit stream signal Sa by IQ signals Siq, the 1-bit stream signal Sa is frequency-deviated to the 1-bit stream signal Sab whose central frequency is approximate 0 Hz and supplied to the digital filter 5.

The digital filter 5 is formed of a band-pass digital filter which prevents the passing of unnecessary noise components contained in the 1-bit stream signal Sab and passes only a 1-bit stream signal Sb as a desired component of an FM wave.

The downsampler 6 corresponds to the rate conversion part 6 shown in FIG.2A, performs a so-called downsampling by executing a thinning-out processing to an oversampled 1-bit stream signal Sb on a time axis, and supplies it to the wave detector 7 by making it the 1-bit stream signal Sc tuned to a signal frequency bandwidth (maximum frequency deviation) of the FM wave. That is, the digital filter 5 and the downsampler 6 form a decimeter.

The wave detector 7 FM-digitally detects a 1-bit stream signal Sc by digital signal processing, and outputs the detected signal (base band signal) Sdet.

Next, the operation of the radio receiving device 1 having such a configuration will be described. For an explanatory convenience sake, the case where a user selects the broadcast channel CH3 shown in Table 1 will be described.

When a user selects broadcast channel CH3, the local oscillation part 8, in accordance with the select control signal CNT from the control part 9, outputs the local oscillation signal Svco with a local oscillation frequency of 64.0 MHz. In this way, the band-pass $\Sigma\Delta$A/D converter 4 A/D converts the RF signal SRf supplied from the RF amplifier 3 with the local oscillation frequency Fsi of 64.0 MHz as an oversampling frequency, and outputs the 1-bit stream signal Sa.

Here, with the broadcast channel CH3 of the channel frequency Fch3 (80. 0 MHz) as contrasted with the oversampling frequency of 64.0 MHz, the FM wave (received signal of base band) of the channel frequency Fch 3 (80.0 MHz) appears in a frequency bandwidth of $\pm$100 kHz with a center of 16.0 MHz as shown in a spectral diagram of FIG. 4. Furthermore, since the central frequency Fcv of the band-pass filter 4f in the band-pass $\Sigma\Delta$A/D converter 4 is set at 16.0 MHz, and the pass bandwidth BW is set at $\pm$100 kHz (200 kHz in all), a frequency bandwidth of $\pm$100 kHz with a center of 16.0 MHz becomes a noise prevention band by the noise shaping effect. Consequently, quantized noises or the like generated in the quantizer 4g are expelled from noise prevention band, so that the FM wave (received signal of a base band) appearing as a signal frequency bandwidth in the noise prevention band is A/D converted into the 1-bit stream signal Sa with good S/N, and supplied to the digital mixer 10.

Next, the 1-bit stream signal is frequency-deviated to the 1-bit stream signal Sab with a central frequency of approximate 0 Hz through multiplying it by I, Q signals Siq from the IQ signal generation circuit 11 in the digital mixer 10, and furthermore, converted into the 1-bit stream signal Sc tuned to a signal frequency bandwidth (maximum frequency deviation) of the FM wave by the digital filter 5 and the downsampler 6, supplied to the wave detector 7, and outputted as the wave detection signal (base band signal) Sdet.

As explained above, according to the radio receiving device 1 of the present embodiment, the RF signal SRF is A/D converted by the band-pass $\Sigma\Delta$A/D converter 4, in which a frequency lower by the central frequency Fcv (16. 0 MHz) of the band-pass filter 4f in the band-pass $\Sigma\Delta$A/D converter 4 than the channel frequency Fchi is set at the sampling frequency (local oscillation frequency) Fsi, and oversampled by the band-pass $\Sigma\Delta$A/D converter 4, so that it can A/D convert an FM wave which is to actually bias a low frequency by the folding effect, and A/D convert it into the 1-bit stream signal Sa with good S/N by the noise-shaping effect.

That is, since the band-pass $\Sigma\Delta$A/D converter 4 can operate at a sampling frequency of about 100 MHz, according to the present example, a desired channel frequency of the FM wave can be A/D converted into the 1-bit stream signal Sa with low frequency by directly A/D converting the RF signal SRF as if A/D converting the intermediate frequency signal (IF signal), so that the mixer for down-converting the RF signal SRF into IF signal can be made unnecessary. As a result, it becomes possible to A/D convert on a side closer to the antenna ANT, and it also becomes possible to form the configuration of the band-pass $\Sigma\Delta$A/D converter 4 after output in the digital signal processing circuit, so that the radio receiving device which can process most of processing functions in the digital region can be provided.

In addition, the radio receiving device 1 of the present example is provided with the digital mixer 10 and the IQ signal generation circuit 11, and generates the 1-bit stream signal Sab with the central frequency of approximate 0 Hz through multiplying the 1-bit stream signal Sa by I, Q signals Siq with the digital mixer, so that the digital signal processing can be executed in the digital filter 5, the downsampler 6 and the wave detector 7 following the digital mixer 10. As a result, a simplification of circuit configuration can be realized.

Further, in the explanation of the above example, the central frequency Fcv of the band-pass filter 4f in the band-pass $\Sigma\Delta$A/D converter 4 is fixed at 16.0 MHz, but, as an example of modification, a variable band-pass filter, which can adjust the central frequency Fcv without changing the pass bandwidth BW, may be used. The central frequency Fcv may be set to meet the requirements of the following formula (3) as well as the foregoing formulas (1),(2).

$$Fcv = Fsi / 4 \quad \dots (3)$$

That is, since the following formula (4) is obtained by substituting Formula (3) for Formula (1), the local oscillation part 8 outputs the local oscillation signal Svco under the control of the control section 11 where 0.8 times of channel frequency Fchi of each broadcast channel CHi becomes the local oscillation frequency Fsi, and furthermore, according to the above formula (3), the band-pass filter 4f automatically sets the central frequency Fcv at a quarter frequency of the channel frequency Fchi.

$$Fsi = 0.8 \times Fchi \quad \dots (4)$$

Table 2 illustrates the relation between the local oscillation frequency Fsi and the central frequency Fcv of the band-pass filter 4f as determined according to the above-mentioned conditions.

[Table 2]

| Broadcast channel CHi | Channel frequency Fchi (MHz) | Local oscillation frequency Fsi (MHz) | Central frequency Fcv Fchi-Fsi (MHz) |
|---|---|---|---|
| AA Broadcast [CH1] | Fch1=77.1 | Fs1=61.68 | 15.42 |
| BB Broadcast [CH2] | Fch2=78.0 | Fs2=62.4 | 15.6 |
| CC Broadcast [CH3] | Fch3=80.0 | Fs3=64.0 | 16.0 |
| DD Broadcast [CH4] | Fch4=80.7 | Fs4=64.56 | 16.14 |
| EE Broadcast [CH5] | Fch5=81.3 | Fs5=65.04 | 16.26 |
| FF Broadcast [CH6] | Fch6=84.7 | Fs6=68.76 | 16.94 |
| ..... | .... | .... | ..... |

According to the example of modification with such a configuration, the ratio between the central frequency Fcv and the oversampling frequency (local oscillation frequency) Fsi is constantly kept a quarter. Thus, the processing can be executed in a convenient combination of frequency for the band-pass $\Sigma\Delta$A/D converter 4 which uses much power-of-two calculation, so that the precision fluctuation of A/D conversion can be prevented.

Furthermore, if the ratio between the central frequency Fcv and the oversampling frequency (local oscillation frequency) Fsi is constantly kept a quarter, the IQ signal generation circuit 11 can readily generate I, Q signals Siq from the local oscillation frequency Fsi by pre-scaling (multiplication), and can easily generate the 1-bit stream signal Sab which is an output of the digital mixer 10 as a complex zero IF signal. Therefore, it can form the configuration of the digital filter 5, the downsampler 6 and the wave detector 7 following the digital mixer 10 with a simpler digital circuit, so that the radio receiving device having a simple configuration can be realized.

In addition, as another example of modification, an amplitude fluctuation (amplitude fluctuation in case of an analog signal) of the 1-bit stream signal Sa which is an output signal of the band-pass $\Sigma\Delta$A/D converter 4 is detected by the digital low-pass filter or the like, and the variable gain circuit (AGC) which automatically adjusts the voltage amplification ratio of the RF signal SRF so as to reduce the detected fluctuation may be provided between an output end of the RF amplifier 3 and an input end of the band-pass $\Sigma\Delta$A/D converter 4. In such a configuration, the amplitude of the RF signal inputted to the band-pass $\Sigma\Delta$A/D converter 4 can be stabilized, so that the receiving performance can be kept to be stabilized. In addition, an analog low-pass filter may be used in order to detect the above-mentioned fluctuation of the 1-bit stream signal Sa.

In addition, as the other example of modification, an amplitude fluctuation of the RF signal SRF outputted from the RF amplifier 3 may be detected by an analog low-pass filter or the like. Also, the variable gain circuit (AGC) which automatically adjusts the voltage amplification ratio of the RF signal SRF so as to reduce the detected fluctuation may be provided between an output end of the RF amplifier 3 and an input end of the band-pass $\Sigma\Delta$A/D converter 4. Also in such a configuration, the amplitude of the RF signal inputted to the band-pass $\Sigma\Delta$A/D converter 4 can be stabilized, so that the receiving performance can be kept to be stabilized.

**Claims**

1. A radio receiving device (1) comprising an A/D converter which A/D converts a received signal of a desired channel frequency(Fchi) contained in an RF signal(SRF),
   wherein said A/D converter is formed of a band-pass A/D converter (4) including a band-pass filter(4b,4f) having a pass bandwidth (BW) corresponding to a signal frequency bandwidth of said received signal with a central frequency (Fcv) lower than said channel frequency being a bandwidth center; and
   wherein the radio receiving device further comprises local oscillation means (8) for supplying a local oscillation signal (Svco) of a local oscillation frequency(Fsi) which is lower by a central frequency of said band-pass filter than said channel frequency to said A/D converter and allowing said A/D converter to A/D convert said RF signal with said local oscillation frequency as a sampling frequency.

2. The radio receiving device according to claim 1, further comprising:

   filter means(5) for passing a desired component(Sb) of said received signal contained in an output signal(Sa) of said A/D converter; and
   rate conversion means(6) for downsampling said desired component passing through said filter means.

3. The radio receiving device according to claim 1, wherein said band-pass A/D converter(4) has said band-pass filter (4b, 4f).

4. The radio receiving device according to claim 3, wherein:

   said central frequency(Fcv) of said band-pass filter is a quarter of said channel frequency(Fchi); and
   said local oscillation frequency(Fsi) is 0.8 times as much as said channel frequency(Fchi).

5. The radio receiving device according to claim 4, further comprising:

   IQ signal generation means (11) for generating an I signal and a Q signal as a quarter frequency of said local oscillation frequency from said local oscillation signal; and
   digital mixer means (10) for multiplying a bit stream signal (Sa) outputted from said band-pass $\Sigma\Delta$A/D converter by said I signal and said Q signal(Siq).

**6.** The radio receiving device according to claim 5, further comprising:

a digital band-pass filter (4f) for passing a desired component of said received signal contained in an output signal(Sab) of said digital mixer means; and
a downsampler(6) for downsampling said desired component(Sb) passing through said digital band-pass filter.

**7.** The radio receiving device according to claim 1, further comprising:

variable gain control means(AGC) which detects an amplitude fluctuation of an output signal(Sa) outputted from said A/D converter(4), and variably controls a voltage amplification ratio for said RF signal based on the results of the detection in order to reduce said amplitude fluctuation.

**8.** The radio receiving device according to claim 1, further comprising:

variable gain control means(AGC) which detects an amplitude fluctuation of said RF signal (SRF), and variably controls a voltage amplification ratio for said RF signal based on the results of the detection in order to reduce said amplitude fluctuation.

# FIG.1 A

ANTENNA ◄──────────── ANALOG REGION ──────────────► ◄── DIGITAL REGION ──►

Fo            Fo

| TRANSMITTING AND RECEIVING SWITCH (RESONANCE CIRCUIT) | RF AMPLIFIER PART | MIXER | IF FILTER | Σ Δ ADC | WAVE DETECTOR /DEMODULATOR | OUTPUT |

FL

LOCAL OSCILLATION PART

# FIG.1 B

ANTENNA ◄────── ANALOG REGION ──────► ◄────────── DIGITAL REGION ──────────►

Fo            Fo

| TRANSMITTING AND RECEIVING SWITCH (RESONANCE CIRCUIT) | RF AMPLIFIER PART | Σ Δ ADC | MIXER | IF FILTER | WAVE DETECTOR /DEMODULATOR | OUTPUT |

FL

LOCAL OSCILLATION PART

# FIG.1 C

GAIN (dB)

SIGNAL FREQUENCY
BANDWIDTH ±75kHz

NOISE SHAPING

0

−50

−100

−150

Fo
(10.7MHz)

FREQUENCY (MHz)

*PRIOR ARY*

## FIG.2 A

ANT

TRACKING FILTER [2] → RF AMPLIFIER [3] → SRF → BAND-PASS A/D CONVERTER [4] → Sa → FILTER PART [5] → Sb → RATE CONVERSION PART [6] → Sc → WAVE DETECTOR [7] → Sdet

1

~Svco

8~ LOCAL OSCILLATION PART — CONTROL PART [9]

CNT

## FIG.2 B

SRF○ → + ⊕ [4a] − → S1 → BAND-PASS FILTER [4b] → S2 → A/D CONVERSION PART [4c] → ○Sa

S3 → D/A CONVERSION PART [4d]

## FIG.2 C

BW

0    Fcv    Fsi  Fchi    RFW    FREQUENCY

## FIG.2 D

NOISE PREVENTION BAND

FM WAVE

NOISE SHAPING

0    Fcv    2Fcv    4Fcv    FREQUENCY
    (16.0MHz)

EP 1 863 185 A1

## FIG.3 A

ANT

TRACKING FILTER — 2

RF AMPLIFIER — 3

SRF

BAND-PASS ΣΔ A/D CONVERTER — 4

Sa

DIGITAL MIXER — 10

Sab

DIGITAL FILTER — 5

Sb

DOWNSAMPLER — 6

Sc

WAVE DETECTOR — 7

Sdet

1

~Siq

IQ SIGNAL GENERATION CIRCUIT — 11

Svco~

8 — PLL/VCO

CNT

CONTROL PART — 9

## FIG.3 B

SRF○

4e
+
( + )
−

S4

BAND-PASS FILTER — 4f

S5

4g

●○Sa

S6

D/A CONVERTER — 4h

EP 1 863 185 A1

# FIG.4

**INTERNATIONAL SEARCH REPORT**

| | International application No. |
| --- | --- |
| | PCT/JP2006/305031 |

A.    CLASSIFICATION OF SUBJECT MATTER
***H04B1/26*** (2006.01), ***H03H3/02*** (2006.01)

According to International Patent Classification (IPC) or to both national classification and IPC

B.    FIELDS SEARCHED

Minimum documentation searched (classification system followed by classification symbols)
H04B1/26, H03H3/02

Documentation searched other than minimum documentation to the extent that such documents are included in the fields searched
    Jitsuyo Shinan Koho        1922-1996    Jitsuyo Shinan Toroku Koho    1996-2006
    Kokai Jitsuyo Shinan Koho  1971-2006    Toroku Jitsuyo Shinan Koho    1994-2006

Electronic data base consulted during the international search (name of data base and, where practicable, search terms used)

C.    DOCUMENTS CONSIDERED TO BE RELEVANT

| Category* | Citation of document, with indication, where appropriate, of the relevant passages | Relevant to claim No. |
| --- | --- | --- |
| A | JP 2000-114880 A  (Toshiba Corp.),<br>21 April, 2000 (21.04.00),<br>Full text; Figs. 1 to 25<br>& EP 0993123 A2        & US 6320529 B1 | 1-8 |
| A | JP 08-088577 A  (Toshiba Corp.),<br>02 April, 1996 (02.04.96),<br>Full text; Figs. 1 to 13<br>& US 5841388 A1 | 1-8 |
| A | JP 2004-173081 A  (Samsung Electronics<br>Co., Ltd.),<br>17 June, 2004 (17.06.04),<br>Full text; Figs. 1 to 5<br>(Family: none) | 1-8 |

| ☒  Further documents are listed in the continuation of Box C. | ☐  See patent family annex. |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 06 June, 2006 (06.06.06) | 13 June, 2006 (13.06.06) |

| Name and mailing address of the ISA/<br>    Japanese Patent Office | Authorized officer |
| --- | --- |
| Facsimile No. | Telephone No. |

Form PCT/ISA/210 (second sheet) (April 2005)

**EP 1 863 185 A1**

**INTERNATIONAL SEARCH REPORT**

| International application No. |
| --- |
| PCT/JP2006/305031 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 08-018457 A  (Asahi Kasei Microsystems Co., Ltd.), 19 January, 1996 (19.01.96), Full text; Figs. 1 to 7 (Family: none) | 1-8 |
| A | JP 2000-224041 A (Matsushita Electric Industrial Co., Ltd.), 11 August, 2000 (11.08.00), Full text; Figs. 1 to 6 (Family: none) | 1-8 |
| A | JP 2001-094450 A  (Sony Corp.), 06 April, 2001 (06.04.01), Full text; Figs. 1 to 5 & US 6813310 B1 | 5 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001526487 A